# EUROPÄISCHE PATENTSCHRIFT

(11) **EP 1 789 697 B1**
(45) Veröffentlichungstag und Bekanntmachung des Hinweises auf die Patenterteilung: **19.05.2010**
(21) Anmeldenummer: 05789571.6
(22) Anmeldetag: 14.09.2005
(51) Int. Cl.: F16F 1/38, B60G 11/12

(54) **ELASTOMERLAGER**
ELASTOMER BEARING
PALIER ELASTOMERE

(30) Priorität: 15.09.2004 DE 102004045064
(43) Veröffentlichungstag der Anmeldung: 30.05.2007
(73) Patentinhaber: ZF Friedrichshafen AG, 88038 Friedrichshafen (DE)
(72) Erfinder: HEUER, Karl, 49638 Nortrup (DE); KAMMEL, Helmut, 49401 Damme (DE); KRAMER, Klaus, 49434 Neuenkirchen (DE); FRANKE, Tim-Malte, 49401 Damme (DE)
(86) Internationale Anmeldenummer: PCT/DE2005/001611
(87) Internationale Veröffentlichungsnummer: WO 2006/029606

(56) Entgegenhaltungen:
- WO-A-02/42097
- US-A- 1 827 233
- US-A- 1 983 796
- US-A- 5 820 115
- US-A1- 2003 197 343

## Beschreibung

Die Erfindung betrifft ein Elastomerlager nach dem Oberbegriff des Patentanspruches 1.

Elastomerlager werden in Kraftfahrzeugen zur Dämpfung von Schwingungen unterschiedlicher Frequenzbereiche eingesetzt. Zur Erzielung der gewünschten Dämpfung wird dem gemäß bei bekannten Elastomerlagern zwischen einem Innenteil und einer Außenhülse ein Elastomerkörper angeordnet. Als Elastomerkörper wird zumeist Gummi verwendet, der aus Naturkautschuk herstellbar ist und durch Zugabe von Zuschlagstoffen in seinen Eigenschaften variiert werden kann, so dass mit den bekannten Elastomerlagern den jeweiligen Anforderungen entsprechende Dämpfungscharakteristiken erreichbar sind. Die stetig steigenden Anforderungen an Elastomerlager für ihren Einsatz in Kraftfahrzeugen erfordern es jedoch, die Variantenvielfalt zu erhöhen.

Aus der US 5,820,115 ist ein Elastomerlager bekannt, bei dem der zwischen dem Innenteil und der Außenhülse angeordnete Elastomerkörper eine Ausbauchung aufweist und in Richtung der Lagerlängsachse betrachtet beidseitig jeweils mindestens ein verjüngter Abschnitt benachbart zu dieser Ausbauchung vorhanden ist. Die Ausbauchung des in der Druckschrift beschriebenen Elastomerlagers greift in eine nutförmige Vertiefung des Innenteiles ein. Durch diese Maßnahme soll ein axiales Auswandern des Elastomerkörpers zwischen dem Innenteil und der Außenhülse verhindert werden.

Eine ähnliche wie die zuvor beschriebene Lösung geht auch aus der US 1 827 233 hervor. Bei der letztgenannten Druckschrift ist eine gattungsbildende Ausführung eines Elastomerlagers insbesondere in der Figur 6 dargestellt beziehungsweise in der zugehörigen Beschreibung näher ausgeführt.

Versuche haben gezeigt, dass eine axiale Beweglichkeit des Elastomerkörpers zwischen dem Innenteil und der Außenhülse durch eine nutförmige Vertiefung am Innenteil, in welche die genannte Ausbauchung des Elastomerkörpers eingreift, nicht wirksam verhindert werden kann. Vielmehr sind bei den genannten Ausführungsvarianten stirnseitig an dem Elastomerlager zusätzliche Axialanschläge erforderlich, um ein Ausweichen des Elastomerkörpers in Axiallängsrichtung zu verhindern. Mit den bekannten Elastomerlagern läßt sich eine hohe radiale Steifigkeit, das heißt, eine geringe Bewegbarkeit der Außenhülse relativ zum Innenteil bei einer Belastung in Richtung quer zur Lagerlängsachse ebenso wenig erzielen, wie eine wirksame axiale Abstützung des Elastomerkörpers ohne zusätzlich am Elastomerlager vorzusehende Anlagebereiche. Derartig komplexe Anforderungen sind mit den aus dem Stand der Technik bekannten Lösungen nicht umsetzbar. Es ist bekannt, Verstärkungselemente als Zwischenlagen in den Elastomerkörper einzubringen, um damit die Festigkeit des Elastomers in radialer Richtung zu erhöhen. Dadurch erhöhen sich nicht nur die Material- und Fertigungskosten derartiger Elastomerlager, es steigen auch die erforderlichen Außenabmessungen an, was bei dem begrenzt zur Verfügung stehenden Bauraum in modernen Kraftfahrzeugen nachteilig ist.

Der Erfindung liegt die Aufgabe zu Grunde, ein Elastomerlager zu schaffen, das eine hohe Radialsteifigkeit, eine axiale Stabilität des Elastomerkörpers, eine niedrige Torsionssteifigkeit und eine höhere Lebensdauer aufweist als dies bei bekannten Ausführungen der Fall ist. Ferner sollte eine möglichst große Variantenvielfalt bei einfachem Aufbau gewährleistet sein.

Die Erfindung löst diese Aufgabenstellung mit den technischen Merkmalen des Patentanspruches 1.
Weitere Ausgestaltungen der Erfindung sind in den sich anschließenden Unteransprüchen wiedergegeben.

Ein erfindungsgemäßes Elastomerlager ist dem gemäß **dadurch gekennzeichnet, dass** die Außenhülse axiale Endabschnitte mit je einer lagereinwärts gerichteten Umformung aufweist und der Elastomerkörper vor Aufnahme des Elastomerlagers in einem Kraftfahrzeugbauteil an den axialen Stirnseiten des Elastomerlagers Ausnehmungen aufweist, die nach dem Einsetzen des Elastomerlagers in das Kraftfahrzeugbauteil bis in den Bereich der Umformungen durch den Elastomerkörper ausgefüllt sind.

Mit einem erfindungsgemäßen Elastomerlager können mehrere an ein derartiges Elastomerlager gestellte Anforderungen für den Einsatz in einem Kraftfahrzeug umgesetzt werden. Die sehr hohe radiale Steifigkeit, das heißt, die relativ geringe Bewegbarkeit der Außenhülse relativ zum Innenteil in Richtung quer zur Lagerlängsachse wird durch das etwa lagermittig in Folge der Ausbauchung vorhandene partiell vergrößerte Elastomervolumen erreicht. Demzufolge weisen diese axialen Endbereiche des Elastomerlagers Verjüngungsabschnitte auf. Die vorteilhafte Gesamtdämpfungscharakteristik des erfindungsgemäßen Elastomerlagers wird jedoch auch durch die stirnseitig vorhandenen Umformungen ermöglicht, welche ein axiales Auswandern des Elastomerkörpers zumindest partiell verhindern. Die geforderte geringe Torsionssteifigkeit des erfindungsgemäßen Elastomerlagers wird durch die Eigenschaften des Elastomerkörpers beeinflusst, der die hierfür entscheidenden Parameter aus seiner innermolekularen Struktur heraus vorgibt, sofern eine stoffschlüssige Verbindung zwischen Elastomerkörper, Innenteil und Außenhülse vorhanden ist. Ebenso ist es jedoch möglich, dass der Elastomerkörper nur mit dem Innenteil oder der Außenhülse festhaftend verbunden wird, um eine torsionsweiche Ausführung zu erreichen.

Insgesamt wurde mit dem erfindungsgemäßen Elastomerlager eine sehr einfache Ausführung geschaffen, die kostengünstig herstellbar ist und in Form eines Baukastensystems nur wenige standardisierte Einzelteile erfordert.

Entsprechend einer Ausgestaltung der Erfindung wird darüber hinaus vorgeschlagen, dass die Faserlänge des Elastomers im Bereich der Ausbauchung größer als in den benachbarten verjüngten Abschnitten ist. Durch diese unterschiedliche Faserlänge kann die radiale Steifigkeit des Elastomerlagers insgesamt verbessert werden. Zudem ist dadurch jedoch auch die axiale Bewegbarkeit des Elastomerlagers beeinflussbar.

Um der Anforderung nach einem Elastomerlager nachzukommen, das möglichst mit wenigen Einzelteilen für unterschiedliche Kraftfahrzeuge und Einsatzzwecke verwendet werden kann, wird eine Art Baukastensystem vorgeschlagen. Dieses kann durch standardisierte Bauteile realisiert werden, die in Entsprechung der Anforderungen an das Elastomerlager lediglich in Details verändert werden. So geht eine sehr vorteilhafte Ausführungsform der Erfindung davon aus, dass das Innenteil eine nutförmige Vertiefung aufweist, die die Ausbauchung des Elastomerkörpers aufnimmt.
Zur Steigerung der Kombinationsmöglichkeiten wird darüber hinaus vorgeschlagen, in die Vertiefung Einlagen aus einem vom Werkstoff der Innenhülse des Innenteils abweichenden Material einzusetzen. Die Einlage kann jedoch auch mittels einer stoffschlüssigen Verbindung, beispielsweise mittels eines Spritzverfahrens oder in anderer Weise in die Vertiefung des Innenteiles eingebracht werden. Somit lässt sich ein einheitliches standardisiertes Innenteil mit einer Vertiefung verwenden, in die je nach den gestellten Anforderungen an das Elastomerlager und den einzusetzenden Elastomerkörper baukastenartig verschiedene Einlagen eingebracht werden können, so dass hierüber die Breite der Ausbauchung des Elastomerkörpers variierbar ist.

Zur Beeinflussung der Charakteristik des Elastomerlagers sind an den axialen Stirnseiten vorhandene Kragen von Vorteil, um beispielsweise die Bewegungsfreiheit des Elastomerkörpers in axialer Richtung einzuschränken. Diese Kragen können durch eine partielle Aufweitung des Innenteiles ebenso erzeugt werden, wie es möglich ist, die Kragen nachträglich an dem Innenteil anzubringen.

Eine besonders einfache Variante der Erfindung kann darin bestehen, das Innenteil mit einer durchgängig kreiszylindrischen Geometrie auszustatten. Diese Ausführungsform ermöglicht ein hohes Maß an Variabilität hinsichtlich der Gestaltung des Innenteils.
So ist es zum Beispiel möglich, die zuvor bereits erwähnten Kragen an dem einheitlich standardisierten Innenteil anzusetzen oder die Außenhülse mit einer bauchigen Aufweitung auszustatten, in die die Ausbauchung des Elastomerkörpers eingreift. Darüber hinaus gestattet eine derartige Ausführungsform des Innenteils an der Außenoberfläche zumindest einen Mantel mit einer zentralen Vertiefung anzuordnen, in welcher die Ausbauchung des Elastomerkörpers zur Einlage kommt. Ebenso liegt es im Bereich der Erfindung, an den axialen Endabschnitten des Innenteils je einen Mantel vorzusehen, wobei in Richtung der Lagerlängsachse betrachtet, die Mäntel zueinander einen Abstand aufweisen sollten, so dass zwischen den Mänteln eine nutförmige Vertiefung ausgebildet wird, die zur Aufnahme der Ausbauchung des Elastomerkörpers dient.
Soweit im Zusammenhang mit der Erfindung eine nutförmige Vertiefung erwähnt ist, so kann diese umlaufend oder abschnittsweise an dem Innenteil oder an der Außenhülse vorgesehen werden.

Gemein ist den vorerwähnten Vorschlägen, dass der etwa lagermittig vorhandene zentrale Bereich des Elastomerkörpers eine Ausbauchung aufweist, die in eine komplementär geformte Vertiefung des Innenteils oder der Außenhülse eingreift, so dass in diesem zentralen Bereich im Querschnitt betrachtet zumindest bereichsweise eine größere Höhe des Elastomerkörpers realisierbar ist, und damit die radialen Steifigkeitsanforderungen an das Elastomerlager erfüllt werden können.

Die Einlagen der Kragen und/oder der mindestens eine Mantel können bei einem erfindungsgemäßen Elastomerlager aus Kunststoff bestehen oder aus einem anderen, beispielsweise spritztechnisch verarbeitbaren Werkstoff hergestellt sein. Denkbar sind ebenfalls Einlagen beziehungsweise Kragen oder Mäntel aus Metallen wie Aluminium oder anderen Werkstoffen.

Um die Eigenschaften des Elastomerkörpers nicht in ungewünschter Weise zu beeinflussen, ist es vorteilhaft, die Außenhülse des Elastomerlagers mit einer über ihren Umfang in sich geschlossenen Mantelfläche auszustatten.

Zur Beeinflussung der Eigenschaften des erfindungsgemäßen Elastomerlagers ist es darüber hinaus von Vorteil, dieses vor dem Einbau in das Kraftfahrzeugbauteil durch eine radiale Verformung des Innenteiles und/oder der Außenhülse zu kalibrieren. Dabei wird entweder die Außenhülse in ihren Außenabmessungen reduziert und/oder das Innenteil in seinen Außenabmessungen erweitert, d.h. aufgeweitet. Durch die Kalibrierung erfährt der Elastomerkörper eine Vorspannung. Die endgültigen an das Elastomerlager gestellten Anforderungen bezüglich der Eigenschaften des Elastomerkörpers werden durch den endgültigen Einbau des Elastomerlagers in das Kraftfahrzeugbauteil erreicht.

Zu dem erfindungsgemäßen Elastomerlager ist zu bemerken, dass es im Sinne der vorgeschlagenen Lösung möglich ist, dass der Elastomerkörper eine stoffschlüssige Verbindung mit dem Innenteil und/oder der Außenhülse aufweist, sodass wenigstens eine festhaftende Verbindung zwischen dem Elastomerkörper und mindestens einem der genannten Teile des Elastomerlagers gegeben ist. Die festhaftende Verbindung kann dabei bereits während des Vulkanisationsverfahrens des Elastomerkörpers oder nachträglich erzeugt werden. Durch eine derartige Maßnahme kann die Torsionssteifigkeit des Elastomerlagers soweit reduziert werden, dass der Elastomerkörper in begrenztem Umfang Gleiteigenschaften aufweist.

Eine Haftverbindung ist jedoch nicht zwingend, sodass eine Ausgestaltung der Erfindung auch eine Ausführung vorsieht, bei der der Elastomerkörper zwischen dem Innenteil und der Außenhülse lediglich eingesetzt ist, ohne dass eine festhaftende Verbindung gegeben sein muss.

Im Zuge der Vereinfachung der Ausführung eines erfindungsgemäßen Elastomerlagers ist es darüber hinaus sinnvoll, dieses insgesamt radialsymmetrisch auszuführen.

Mit der erfindungsgemäßen Lösung wurde insgesamt ein Elastomerlager geschaffen, das eine hohe Radialsteifigkeit bei niedriger Torsionssteifigkeit gewährleistet. Es weist einen sehr einfachen Aufbau auf und kann im Sinne eines Baukastensystems mit standardisierten Bauteilen gemäß den an das Elastomerlager gestellten Anforderungen für unterschiedliche Kraftfahrzeugtypen zusammengestellt werden. Durch die Ausbauchung des Elastomerkörpers im zentralen Bereich des Elastomerlagers wird eine Hinterschneidung geschaffen. Über eine Kalibrierung des Elastomerkörpers können die Parameter des Elastomerlagers sehr diffizil eingestellt werden. Die axiale Belastbarkeit wird wesentlich durch die Umformung der Außenhülse begrenzt beziehungsweise durch eine Aufweitung oder die Schaffung von Kragen am Außenmantel des Innenteiles. Durch den erfindungsgemäß gestalteten Elastomerkörper wird im zentralen Bereich, in dem sich die Ausbauchung befindet, eine längere Elastomerfaser als in den benachbart zu dieser Ausbauchung befindlichen verjüngten Abschnitten erzielt, so dass in den verjüngten Abschnitten eine verglichen mit der Ausbauchung reduzierte Faserlänge gegeben ist.

Nachfolgend werden verschiedene bevorzugte Ausführungsformen eines erfindungemäßen Elastomerlagers anhand der Zeichnungen näher erläutert.

Es zeigen:
- Figur 1:: eine perspektivische Darstellung einer ersten Ausführungsvariante eines erfindungemäßen Elastomerlagers als Einzelteil,
- Figur 2:: einen Schnitt durch das in Figur 1 gezeigte Elastomerlager in Richtung der Lagerlängsachse,
- Figur 3:: ein in ein Kraftfahrzeugbauteil eingesetztes Eastomerlager nach Figur 1,
- Figur 4:: eine weitere Ausführungsform eines erfindungsgemäßen Elastomerlagers als Einzelteil im Schnitt entlang der Lagerlängsachse,
- Figur 5:: das in ein Kraftfahrzeugbauteil eingesetzte Elastomerlager gemäß Figur 4,
- Figur 6:: eine andere vorteilhafte Variante eines erfindungemäßen Elastomerlagers als Einzelteil im Schnitt entlang der Lagerlängsachse,
- Figur 7:: eine vergrößerte Einzelheit gemäß der Darstellung VII in Figur 6,
- Figur 8:: das in Figur 6 gezeigte in einem Kraftfahrzeugbauteil aufgenommene Elastomerlager,
- Figur 9:: eine perspektivische Darstellung einer weiteren Ausführungsform eines erfindungsgemäßen Elastomerlagers als Einzelteil,
- Figur 10:: das in Figur 9 gezeigte Elastomerlager im Schnitt entlang der Lagerlängsachse,
- Figur 11:: das in den Figuren 9 und 10 gezeigte Elastomerlager in einem Kraftfahrzeugbauteil,
- Figur 12:: eine perspektivische Darstellung einer Ausführungsvariante eines erfindungsgemäßen Elastomerlagers als Einzelteil,
- Figur 13:: die in Figur 12 gezeigte Ausführungsform im Schnitt entlang der Lagerlängsachse
und
- Figur 14:: das in den Figuren 12 und 13 gezeigte Elastomerlager, aufgenommen in einem Kraftfahrzeugbauteil.

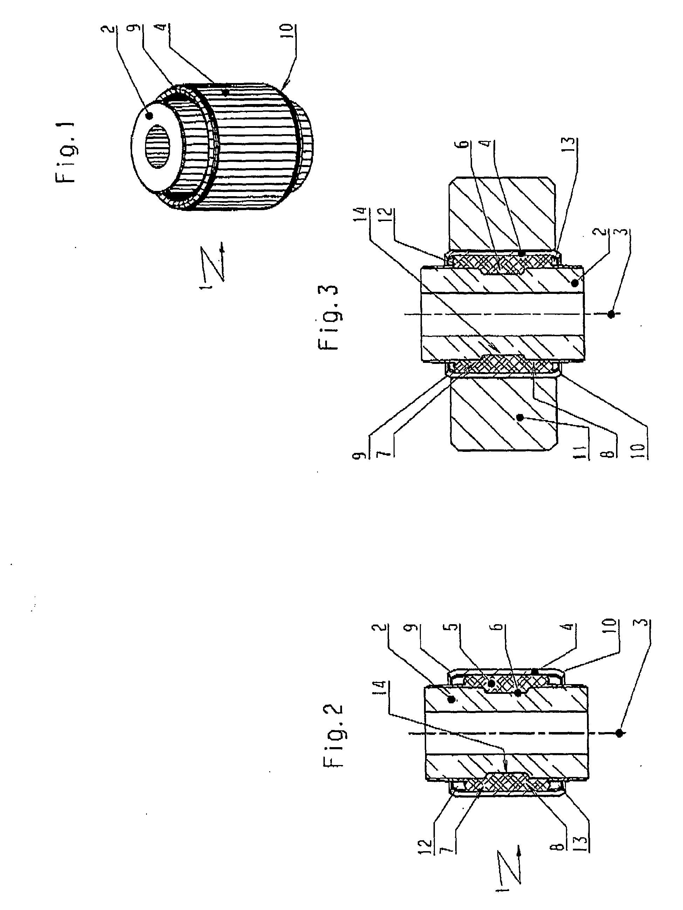

Das in der Figur 1 gezeigte Ausführungsbeispiel eines insgesamt mit 1 bezeichneten erfindungsgemäßen Elastomerlagers besteht im wesentlichen aus einem Innenteil 2, einer dieses koaxial zur Lagerlängsachse umgebenden Außenhülse 4, zwischen denen ein in der Figur 1 nicht erkennbarer Elastomerkörper 5 angeordnet ist. Die Außenhülse weist als Besonderheit an ihren axialen Endabschnitten jeweils lagereinwärts gerichtete Umformungen 9 beziehungsweise 10 auf, die den während der Kalibrierung zurückgelegten axialen Verformungsweg des sich zwischen dem Innenteil 2 und der Außenhülse 4 befindlichen Elastomerkörpers 5 begrenzen.

In der Figur 2 ist ein erfindungsgemäßes Elastomerlager entsprechend der Ausführungsvariante in Figur 1 im Schnitt entlang der Lagerlängsachse 3 dargestellt. Aus dieser Figur geht der innere Aufbau dieser ersten Ausführungsvariante anschaulich hervor. Das Elastomerlager 1 weist ein Innenteil 2, eine Außenhülse 4 und einen zwischen dem Innenteil 2 und der Außenhülse 4 angeordneten Elastomerkörper 5 auf. Der Elastomerkörper 5 verfügt in seinem zentralen Bereich über eine Ausbauchung 6, die in eine komplementäre, nutförmige Vertiefung 14 des Innenteiles 2 eingreift. An seinen axialen Stirnseiten weist der Elastomerkörper 5 jeweils Ausnehmungen 12 beziehungsweise 13 auf. Benachbart zu der Ausbauchung 6 des Elastomerkörpers 5 sind in Längsrichtung der Lagerlängsachse 3 betrachtet an dem Elastomerkörper 5 verjüngte Abschnitte 7 und 8 mit einem verglichen mit der Ausbauchung 6 reduzierten Querschnitt vorhanden. In diesen Abschnitten 7, 8 ist die Faserlänge des Elastomers geringer als im Bereich der Ausbauchung 6.

Die Figur 3 stellt eine Verwendung des erfindungsgemäßen Elastomerlagers 1 dar. Dieses als Schnittdarstellung gezeigte Elastomerlager 1 entspricht weitgehend der Darstellung in Figur 2. Lediglich die Ausnehmungen 12 und 13 sind durch die Kalibrierung, das heißt durch die Reduzierung des Durchmessers der Außenhülse 4 auf das Nennmaß des Aufnahmeauges des Kraftfahrzeugbauteiles 11 reduziert, so dass der Elastomerkörper 5 axial ausgewandert ist und die Ausnehmungen 12, 13 bis in den Bereich der Umformungen 9 beziehungsweise 10 der Außenhülse 4 ausfüllt.

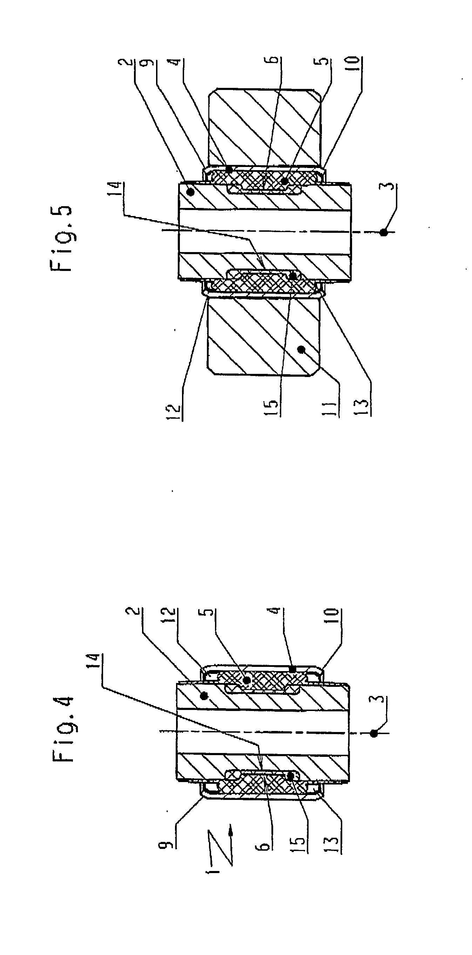

In den Figuren 4 und 5 sind jeweils Schnittdarstellungen einer weiteren Ausführungsform eines erfindungsgemäßen Elastomerlagers 1 dargestellt, wobei die Figur 4 das Elastomerlager 1 als separates Bauteil zeigt und in der Figur 5 ein in ein Kraftfahrzeugbauteil 11 eingesetztes Elastomerlager 1 gezeigt ist. Die Besonderheit der Ausführungsvariante in den Figuren 4 und 5 besteht darin, dass hier im Sinne eines Baukastensystems ein sehr einfaches und multivalent einsetzbares Innenteil 2 zum Einsatz kommt. Das Innenteil 2 weist eine standardisierte, nutförmige Vertiefung 14 auf, die für Lager mit unterschiedlichen Kennungsdaten einsetzbar ist. Die Unterscheidung der einzelnen Elastomerlagertypen erfolgt durch Verwendung differenzierter Einlagen 15. Die Einlage 15 ist bei der Ausführung in der Figur 4 als eine eingespritzte Kunststoffeinlage ausgeführt, so dass eine gegenüber der ursprünglichen nutförmigen Vertiefung 14 des Innenteils 2 reduzierte Vertiefung entsteht, in die, wie zuvor bereits beschrieben, die Ausbauchung 6 des Elastomerkörpers 5 eingreift.
Nach dem Einbau des Elastomerlagers 1 in das Kraftfahrzeugbauteil 11 sind die Ausnehmungen 12 und 13 des Elastomerkörpers 5, wie bereits bei der ersten Ausführungsform beschrieben, weitgehend ausgefüllt, so dass sich der Elastomerkörper 5 in axialer Richtung bis in den Bereich der Umformungen 9 und 10 erstreckt.

Die Geometrie der Außenhülse 4 entspricht bei dieser Ausführungsvariante der Darstellung in Figur 1, so dass auch hieraus erkennbar wird, dass standardisierte Bauteile für Elastomerlager unterschiedlicher Anforderungsprofile zum Einsatz kommen können.

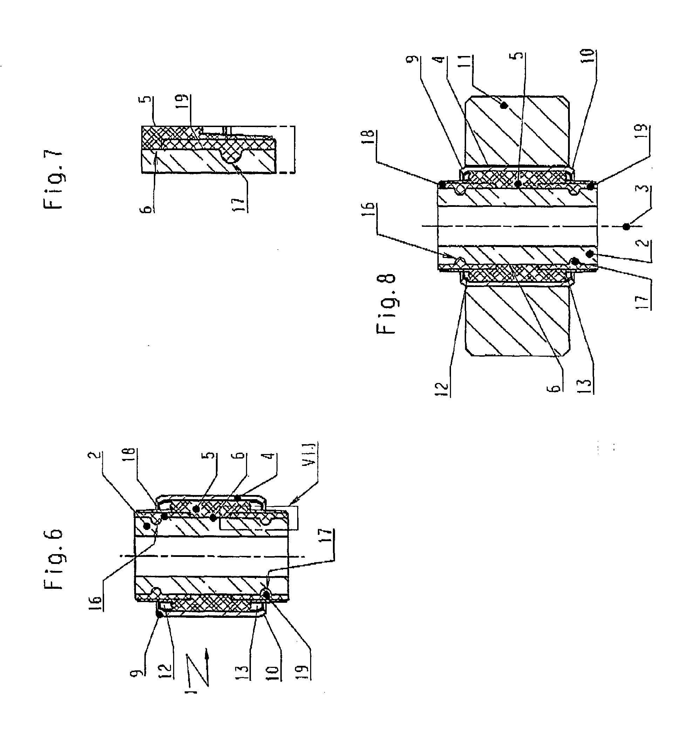

In der Figur 6 ist eine weitere, sehr vorteilhafte Ausführungsform eines erfindungsgemäßen Elastomerlagers 1 gezeigt. Hierbei wird ein im Querschnitt kreiszylinderförmiges Innenteil 2 verwendet. In den axialen Endbereichen dieses im Querschnitt kreiszylinderförmigen Innenteiles 2 ist jeweils ein Mantel 18 beziehungsweise 19 angesetzt. Dieser Mantel 18, 19 ist vorwiegend als Kunststoffformteil gestaltet, und greift mit nasenförmigen Erweiterungen in komplementär in dem Innenteil vorhandene Sicken 16, 17 ein, so dass dadurch eine formschlüssige Verbindung gewährleistet ist. Ebenso ist ein unmittelbares Anspritzen der Mäntel 18, 19 möglich. In Richtung der Lagerlängsachse 3 betrachtet, weisen die Mäntel 18 und 19 im zentralen Bereich des Innenteiles 2 einen Abstand zueinander auf, so dass eine nutförmige Vertiefung für die Aufnahme der Ausbauchung 6 des Elastomerkörpers 5 entsteht, der bei der Ausführung gemäß Figur 6 unmittelbar an der Außenoberfläche des Innenteiles 2 zur Anlage kommt. Auch bei dieser Ausführungsform ist eine einfache Variation der Elastomerlagerparameter durch Veränderung der Geometrie der Mäntel 18 beziehungsweise 19 möglich, ohne dass die Abmessungen der Außenhülse 4 oder des Innenteiles 2 verändert werden müssen. Dadurch sind sowohl die Radialsteifigkeit als auch die Torsionssteifigkeit und die axiale Belastbarkeit eines erfindungsgemäßen Elastomerlagers 1 in beliebiger Weise gestaltbar.

Die Figur 7 zeigt vergrößert den Ausschnitt VII aus Figur 6. Hierin ist noch einmal die Sicke 17 erkennbar, in die die Nase des Mantels 19 eingreift.

Die Figur 8 zeigt ein Elastomerlager 1 gemäß Figur 6, das in ein Kraftfahrzeugbauteil 11 eingesetzt ist. Durch die Kalibrierung des Elastomerlagers 1 wird eine Vorspannung in den Elastomerkörper 5 eingebracht, so dass die Ausnehmungen 12 und 13 bis in den Bereich der Umformungen 9 und 10 vom Elastomerkörper 5 ausgefüllt sind.

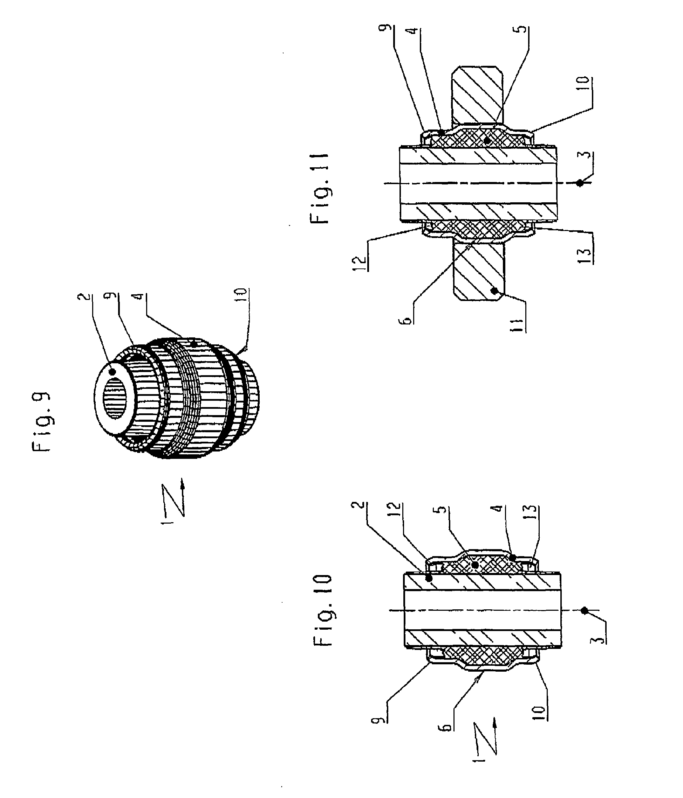

In den Figuren 9 bis 11 ist eine spezielles erfindungsgemäßes Elastomerlager 1 gezeigt. Das hier zum Einsatz kommende Innenteil 2 ist als im Querschnitt durchgängig kreiszylindrisches Bauteil gestaltet. Bei dieser Ausführungsform wird nicht das Innenteil 2 mit einer Vertiefung 14 versehen, sondern die Außenhülse 4 weist eine Ausbauchung auf, in welche die Ausbauchung 6 des Elastomerkörpers 5 eingreift. In der Figur 9 ist die perspektivische Darstellung eines derartig ausgeführten Elastomerlagers 1 als Einzelteil zu erkennen, während die Figur 10 eine Schnittdarstellung des Elastomerlagers 1 entlang der Lagerlängsachse 3 und die Figur 11 das in einem Kraftfahrzeugbauteil 11 aufgenommene Elastomerlager 1 zeigt.

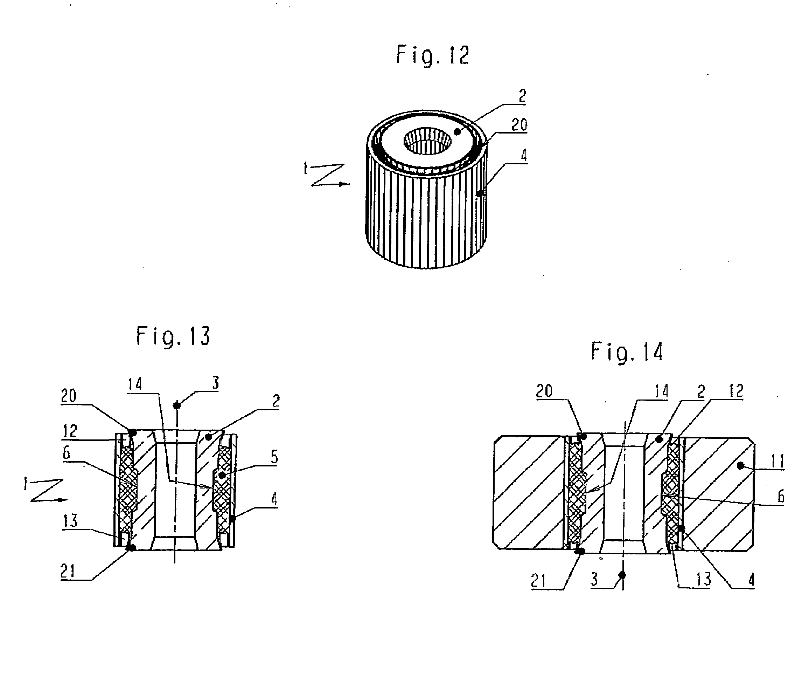

In den Figuren 12 bis 14 wird darüber hinaus eine Ausführungsvariante dargestellt, die ein Innenteil 2 mit einer zentral angeordneten nutförmigen Vertiefung 14 aufweist, in die die komplementäre Ausbauchung 6 des Elastomerkörpers 5 eingreift. An der als Kreiszylinder gestalteten Außenhülse 4 sind an den axialen Endbereichen keine Umformungen vorhanden. Vielmehr ist die Außenhülse 4 durchgängig von kreiszylindrischer Geometrie. Um ein axiales Auswandern des Elastomerkörpers 5 in Richtung der Lagerlängsachse 3 in Grenzen zu halten, wird bei der hier vorgestellten Lösung das Innenteil 2 an seinen Stirnseiten aufgeweitet, so dass in diesen Abschnitten jeweils ein Kragen 20 beziehungsweise 21 ausgebildet ist. Die perspektivische Darstellung in der Figur 12 zeigt den Aufbau dieser Variante eines Lagers in anschaulicher Weise, während die Schnittdarstellung in Figur 13 den inneren Aufbau erkennen lässt. Der Figur 14 ist darüber hinaus die Einbaulage in einem Kraftfahrzeugbauteil 11 entnehmbar. Wie bereits bei den zuvor beschriebenen Varianten eines erfindungemäßen Elastomerlagers 1 sind gemäß Figur 14 die Ausnehmungen 12 und 13 durch das Elastomer des Elastomerkörpers 5 weitgehend ausgefüllt. Als axiale Begrenzung der Ausweitung des Elastomerkörpers 5 in axialer Richtung dienen hierbei nicht die Umformungen der Außenhülse 4 sondern die Kragen 20, 21, die an den axialen Stirnseiten des Innenteiles 2 vorhanden sind.

### Bezugszeichenliste

1. Elastomerlager
2. Innenteil
3. Lagerlängsachse
4. Außenhülse
5. Elastomerkörper
6. Ausbauchung
7. verjüngter Abschnitt
8. verjüngter Abschnitt
9. Umformung
10. Umformung
11. Kraftfahrzeugbauteil
12. Ausnehmung
13. Ausnehmung
14. nutförmige Vertiefung
15. Einlage
16. Sicke
17. Sicke
18. Mantel
19. Mantel
20. Kragen
21. Kragen

## Patentansprüche

1. Elastomerlager (1) mit einem Innenteil (2), einer das Innenteil (2) koaxial zu einer die Lagermitte definierenden Lagerlängsachse (3) umgebenden Außenhülse (4) und einem zwischen dem Innenteil (2) und der Außenhülse (4) angeordneten Elastomerkörper (5), wobei der Elastomerkörper (5) mindestens eine Ausbauchung (6) aufweist, der in Richtung der Lagerlängsachse (3) betrachtet beidseitig jeweils mindestens ein verjüngter Abschnitt (7, 8) benachbart ist,
**dadurch gekennzeichnet, dass**
die Außenhülse (4) axiale Endabschnitte mit je einer lagereinwärts gerichteten Umformung (9, 10) aufweist oder an der Außenoberfläche der axialen Endabschnitte des Innenteiles (2) Kragen (20, 21) angeformt oder angebracht sind, und der Elastomerkörper (5) vor Aufnahme des Elastomerlagers (1) in einem Kraftfahrzeugbauteil (11) an den axialen Stirnseiten des Elastomerlagers (1) Ausnehmungen (12, 13) aufweist, die nach dem Einsetzen des Elastomerlagers (1) in das Kraftfahrzeugbauteil (11) durch die Reduzierung des Durchmessers der Aussenhülse (4) auf das Nennmaß bis in den Bereich der Umformungen (9, 10) durch den Elastomerkörper (5) ausgefüllt sind.

2. Elastomerlager nach Anspruch 1,
**dadurch gekennzeichnet, dass**
die Faserlänge des Elastomers im Bereich der Ausbauchung (6) größer als in den benachbarten, verjüngten Abschnitten (7, 8) ist.

3. Elastomerlager nach einem der vorstehend genannten Ansprüche,
**dadurch gekennzeichnet, dass**
das Innenteil (2) eine nutförmige Vertiefung (14) aufweist, die die Ausbauchung (6) des Elastomerkörpers (5) aufnimmt.

4. Elastomerlager nach Anspruch 3,
**dadurch gekennzeichnet, dass**
in der Vertiefung (14) eine Einlage (15) aus einem vom Werkstoff des Innenteils (2) abweichenden Material aufgenommen ist.

5. Elastomerlager nach Anspruch 1 oder 2,
**dadurch gekennzeichnet, dass**
das Innenteil (2) durchgängig eine kreiszylindrische Geometrie aufweist.

6. Elastomerlager nach Anspruch 5,
**dadurch gekennzeichnet, dass**
die Außenhülse (4) eine bauchige Aufweitung aufweist, die die Ausbauchung (6) des Elastomerkörpers (5) aufnimmt.

7. Elastomerlager nach Anspruch 5,
**dadurch gekennzeichnet, dass**
die Innenhülse (2) auf ihrer Außenoberfläche zumindest einen Mantel (18, 19) mit einer zentralen Vertiefung zur Aufnahme der Ausbauchung (6) des Elastomerkörpers (5) aufweist.

8. Elastomerlager nach Anspruch 5,
**dadurch gekennzeichnet, dass**
die Innenhülse (2) an jedem ihrer axialen Endabschnitte einen Mantel (18, 19) aufweist, wobei in Richtung der Lagerlängsachse (3) betrachtet die Mäntel (18, 19) zueinander beabstandet sind, sodass zwischen den Mänteln (18, 19) eine Vertiefung zur Aufnahme der Ausbauchung (6) des Elastomerkörpers (5) ausgebildet ist.

9. Elastomerlager nach einem der Ansprüche 4, 7 oder 8,
**dadurch gekennzeichnet, dass**
die Einlage (15), der Kragen (20 beziehungsweise 21) und/oder der mindestens eine Mantel (18, 19) aus Kunststoff besteht und entweder an dem Innenteil (2) befestigt ist oder unmittelbar an dem Innenteil (2) angespritzt ist.

10. Elastomerlager nach einem der vorstehend genannten Ansprüche,
**dadurch gekennzeichnet, dass**
die Außenhülse (4) eine über ihren Umfang in sich geschlossene Mantelfläche aufweist.

11. Elastomerlager nach einem der vorstehend genannten Ansprüche,
**dadurch gekennzeichnet, dass**
das Elastomerlager (1) vor dem Einbau in das Kraftfahrzeugbauteil (11) durch eine radiale Verformung des Innenteiles (2) und/oder der Außenhülse (4) eine Kalibrierung erfährt, durch die der Elastomerkörper (5) eine Vorspannung aufweist.

12. Elastomerlager nach einem der vorstehend genannten Ansprüche,
**dadurch gekennzeichnet, dass**
der Elastomerkörper (5) eine stoffschlüssige Verbindung mit dem Innenteil (2) und/oder der Außenhülse (4) aufweist.

13. Elastomerlager nach einem der vorstehend genannten Anssprüche,
**dadurch gekennzeichnet, dass**
der Elastomerkörper (5) zwischen dem Innenteil (2) und/oder der Außenhülse (4) unter Meidung einer festhaftenden Verbindung eingesetzt ist.

14. Elastomerlager nach einem der vorstehend genannten Ansprüche,
**dadurch gekennzeichnet, dass**
das Elastomerlager (1) insgesamt radialsymmetrisch ausgeführt ist.

## Claims

1. Elastomer bearing (1) comprising an inner part (2), an outer sleeve (4) that surrounds the inner part (2) coaxially with a bearing longitudinal axis (3) defining the bearing centre, and an elastomer body (4) disposed between the inner part (2) and the outer sleeve (4), wherein the elastomer body (5) has at least one bulge (6), which viewed in the direction of the bearing longitudinal axis (3) is adjoined on either side by at least one diminished portion (7, 8),
**characterized in that**
the outer sleeve (4) has axial end portions each having a shaped portion (9, 10), which is directed inwards relative to the bearing, or collars (20, 21) are moulded or mounted on the outer surface of the axial end portions of the inner part (2), and the elastomer body (5) prior to receiving of the elastomer bearing (1) in a motor vehicle component (11) has at the axial end faces of the elastomer bearing (1) recesses (12, 13), which after insertion of the elastomer bearing (1) into the motor vehicle component (11) are filled as far as into the region of the shaped portions (9, 10) by the elastomer body (5) as a result of the reduction of the diameter of the outer sleeve (4) to the nominal dimension.

2. Elastomer bearing according to claim 1,
**characterized in that**
the fibre length of the elastomer is greater in the region of the bulge (6) than in the adjacent, diminished portions (7, 8).

3. Elastomer bearing according to one of the preceding claims,
**characterized in that**
the inner part (2) has a groove-shaped depression (14) that receives the bulge (6) of the elastomer body (5).

4. Elastomer bearing according to claim 3,
**characterized in that**
in the depression (14) an insert (15) made of a different material to the material of the inner part (2) is received.

5. Elastomer bearing according to claim 1 or 2,
**characterized in that**
the inner part (2) consistently has a circular-cylindrical geometry.

6. Elastomer bearing according to claim 5,
**characterized in that**
the outer sleeve (4) has a bellied widening that receives the bulge (6) of the elastomer body (5).

7. Elastomer bearing according to claim 5,
**characterized in that**
the inner sleeve (2) on its outer surface has at least one casing (18, 19) with a central depression for receiving the bulge (6) of the elastomer body (5).

8. Elastomer bearing according to claim 5,
**characterized in that**
the inner sleeve (2) at each of its axial end portions has a casing (18, 19), wherein viewed in the direction of the bearing longitudinal axis (3) the casings (18, 19) are mutually spaced apart so as to form between the casings (18, 19) a depression for receiving the bulge (6) of the elastomer body (5).

9. Elastomer bearing according to one of claims 4, 7 or 8,
**characterized in that**
the insert (15), the collar (20 and/or 21) and/or the at least one casing (18, 19) are made of plastics material and either fastened to the inner part (2) or moulded directly on the inner part (2).

10. Elastomer bearing according to one of the preceding claims,
**characterized in that**
the outer sleeve (4) has a lateral surface that is self-contained over its circumference.

11. Elastomer bearing according to one of the preceding claims,
**characterized in that**
the elastomer bearing (1), prior to fitting in the motor vehicle component (11), as a result of a radial deformation of the inner part (2) and/or of the outer sleeve (4) experiences a calibration, as a result of which the elastomer body (5) has an initial tension.

12. Elastomer bearing according to one of the preceding claims,
**characterized in that**
the elastomer body (5) has a cohesive connection to the inner part (2) and/or the outer sleeve (4).

13. Elastomer bearing according to one of the preceding claims,
**characterized in that**
the elastomer body (5) is inserted between the inner part (2) and/or the outer sleeve (4) with simultaneous avoidance of an adhesive connection.

14. Elastomer bearing according to one of the preceding claims,
**characterized in that**
the elastomer bearing (1) as a whole is of a radially symmetrical design.

## Revendications

1. Palier d'élastomère (1) avec une partie interne (2), une douille externe (4) entourant la partie interne (2) coaxialement à un axe longitudinal de palier (3) définissant le centre du palier et un corps d'élastomère (5) aménagé entre la partie interne (2) et la douille externe (4), dans lequel le corps d'élastomère (5) présente au moins un renflement (6) qui, considéré dans la direction de l'axe longitudinal de palier (3), est adjacent de part et d'autre, respectivement, à au moins une section amincie (7, 8),
**caractérisé en ce que**
la douille externe (4) présente des sections d'extrémité axiales comprenant respectivement une déformation (9, 10) dirigée en dedans du palier ou des collerettes (20, 21) sont moulées ou appliquées sur la surface externe des sections d'extrémité axiales de la partie interne (2), et le corps d'élastomère (5) présente, avant réception du palier d'élastomère (1) dans un composant de véhicule automobile (11) sur les faces frontales axiales du palier d'élastomère (1), des évidements (12, 13) qui sont comblés après insertion du palier d'élastomère (1) dans le composant de véhicule automobile (11) par réduction du diamètre de la douille externe (4) à la mesure nominale jusque dans la zone des déformations (9,10) par le corps d'élastomère (5).

2. Palier d'élastomère selon la revendication 1,
**caractérisé en ce que**
la longueur de fibre de l'élastomère dans la zone du renflement (6) est supérieure à celle des sections adjacentes amincies (7, 8).

3. Palier d'élastomère selon l'une quelconque des revendications précédentes,
**caractérisé en ce que**
la partie interne (2) présente une cavité (14) en forme de rainure, qui reçoit le renflement (6) du corps d'élastomère (5).

4. Palier d'élastomère selon la revendication 3,
**caractérisé en ce que**
la cavité (14) reçoit une garniture (15) constituée d'un matériau différent du matériau de la partie interne (2).

5. Palier d'élastomère selon la revendication 1 ou 2,
**caractérisé en ce que**
la partie interne (2) présente généralement une géométrie cylindrique à base circulaire.

6. Palier d'élastomère selon la revendication 5,
**caractérisé en ce que**
la douille externe (4) présente un évasement renflé qui reçoit le renflement (6) du corps d'élastomère (5).

7. Palier d'élastomère selon la revendication 5,
**caractérisé en ce que**
la douille interne (2) présente sur sa surface externe au moins une enveloppe (18, 19) avec une cavité centrale susceptible de recevoir le renflement (6) du corps d'élastomère (5).

8. Palier d'élastomère selon la revendication 5,
**caractérisé en ce que**
la douille interne (2) présente une enveloppe (18, 19) sur chacune de ses sections d'extrémité axiales, dans lequel les enveloppes (18, 19), considérées dans la direction de l'axe longitudinal de palier (3), sont distantes l'une de l'autre de manière à former entre les enveloppes (18, 19) une cavité susceptible de recevoir le renflement (6) du corps d'élastomère (5).

9. Palier d'élastomère selon l'une quelconque des revendications 4, 7 ou 8,
**caractérisé en ce que**
la garniture (15), la collerette (20 ou 21) et/ou la au moins une enveloppe (18,19) est/sont constituées d'un matériau synthétique et est/sont fixées sur la partie interne (2) ou est/sont moulées par injection directement sur la partie interne (2).

10. Palier d'élastomère selon l'une quelconque des revendications précédentes,
**caractérisé en ce que**
la douille externe (4) présente une surface d'enveloppe fermée en soi sur sa périphérie.

11. Palier d'élastomère selon l'une quelconque des revendications précédentes,
**caractérisé en ce que**
le palier d'élastomère (1) subit un calibrage avant l'insertion dans le composant de véhicule automobile (11) par une déformation radiale de la partie interne (2) et/ou de la douille externe (4), par lequel le corps d'élastomère (5) présente une précontrainte.

12. Palier d'élastomère selon l'une quelconque des revendications précédentes,
**caractérisé en ce que**
le corps d'élastomère (5) présente un raccordement par assemblage matériel avec la partie interne (2) et/ou la douille externe (4).

13. Palier d'élastomère selon l'une quelconque des revendications précédentes,
**caractérisé en ce que**
le corps d'élastomère (5) est inséré entre la partie interne (2) et/ou la douille externe (4) en évitant un raccordement fixe.

14. Palier d'élastomère selon l'une quelconque des revendications précédentes,
**caractérisé en ce que**
le palier d'élastomère (1) est réalisé dans l'ensemble avec une symétrie radiale.
